# EUROPEAN PATENT SPECIFICATION

(11) **EP 2 153 932 B1**
(45) Date of publication and mention of the grant of the patent: **02.02.2011**
(21) Application number: 09165182.8
(22) Date of filing: 10.07.2009
(51) Int. Cl.: B23K 35/36, B23K 35/362, B23K 35/368

(54) **Method for submerged arc welding of steel for low temperature service using melt flux for submerged arc welding**
Verfahren für Unterpulverschweißen von Stahl zur Anwendung bei niedrigen Temperaturen mit Schmelzfluss für Unterpulverschweißen
Procédé de soudure à l'arc submergée d'acier pour service à basse température par l'utilisation d'un flux mélangé pour soudure à l'arc submergée

(30) Priority: 25.07.2008 JP 2008191787; 27.04.2009 JP 2009107709
(43) Date of publication of application: 17.02.2010
(73) Proprietor: Nippon Steel & Sumikin Welding Co., Ltd., Chuo-ku Tokyo 104-0045 (JP)
(72) Inventor: Nakazawa, Hiroshi, Tokyo 104-0045 (JP); Tsuji, Norichika, Tokyo 104-0045 (JP)
(74) Representative: Vossius & Partner

(56) References cited:
- EP-A1- 2 067 566
- JP-A- 5 285 691
- JP-A- 10 094 895
- JP-A- 2006 305 604
- DATABASE WPI Section Ch, Week 19755 Thomson Scientific, London, GB; Class M,page 23, AN 1975-08093 XP002558756 & JP 49 051136 A (KOBE STEEL LTD) 17 May 1974 (1974-05-17) & JP 49 051136 A (KOBE STEEL LTD) 17 May 1974 (1974-05-17)

## Description

The present invention relates to a method for submerged arc welding of steel for low temperature service which is used for welding of an LPG storage tank, an instrument for low temperature service and a steel structure for cold districts and in particular relates to a method for the submerged arc welding of the steel for low temperature service, by which a weld metal, a bead shape and a weldability having an excellent mechanical properties can be obtained even in a welding condition at high speed.

A submerged arc welding has been applied to the welding in a broad range of fields such as steel pipes, building constructions, bridges and vehicles because stable weldability with high efficiency and mechanical properties of weld metals are obtained. With development of an energy industry in recent years, the steel for low temperature service have been used widely, and a use ratio thereof is increased year by year. Thus, it has been required that the submerged arc welding is further improved for enhancing productivity and assuring safety and durability in executions using the steel for low temperature service. Among them, a high efficiency welding and making a weld metal having a higher toughness are extremely largely required.

Conventionally, a melt flux or a bond flux has been used as the flux in the submerged arc welding of the steel for low temperature service, and a solid wire is mainly used depending on component system of the flux. The melt flux is obtained by melting various mineral raw materials at a high temperature of 1500°C or above and cooling them followed by pulverizing them into powders, and is characterized in that absorbed moisture is low, an amount of diffusible hydrogen can be reduced and handling and storage thereof are easy. Meanwhile, the bond flux is obtained by adding binder(water glass) to various raw materials, granulating them and baking them at about 550°C, and has an excellent characteristic that chemical compositions of the weld metal can be controlled freely, but has a weak point that the flux easily absorbs the moisture.

In particular, the melt flux is often applied to the submerged arc welding of the steel for low temperature service for making the weld metal having the higher toughness, welding at higher speed and stable assuring a quality of the weld metal. However, the chemical ingredients of the weld metal can not be controlled freely using the melt flux. Thus, a basicity must be increased and the amount of oxygen in the weld metal must be decreased for realizing the higher toughness of the weld metal. However, only by giving higher value the basicity, there is a limit to the enhancement of the toughness, and the normal bead shape and the good weld workability can not be obtained. Thus, in order to control the chemical compositions of the weld metal and realize the higher toughness, it is necessary to contain alloy components such as Ni, Mn and Mo in the solid wire. However, when the amount of the alloy component in the wire is increased, the wire itself has a higher strength, and the wire is further hardened by process hardening upon drawing process in the production of the wire for welding. When the wire is hardened, lowering of productivity and the wire is often broken, so that the production of the wire becomes difficult. Thus, the strength of the wire is generally decreased by giving a heat treatment during the drawing, but when the amount of the alloy component is large, a transformation temperature of the wire is lowered, and thus it is necessary to hold the wire for a long time when the wire is softened by an annealing treatment. When the wire is softened by the normalizing treatment at a high temperature, the wire is easily transformed into the structure having the high strength. Therefore, in order to soften the wire, it is necessary to set a heat treatment temperature low, hold the wire for a long time and cool the wire slowly. Thus, the productivity extremely worsens.

When the weld is carried out using the solid wire having the high strength, the shape of the wire can not be changed, straightening of the wire becomes difficult, a center misalignment between a groove center and the wire easily occurs, and the good beads are not obtained, which are problematic in weldability. As described above, the solid wire having the high strength has been problematic in that the productivity upon producing the wire and the weldability upon welding are reduced.

Thus, flux cored wires containing various fluxes for the submerged arc welding have been developed. However, it is necessary to decrease the amount of oxygen in the weld metal in order to obtain the weld metal having the high toughness. It is also necessary to make the flux cored wire dehydrogenize to a low level because a cold crack (hydrogen crack) easily occurs in the welding of the steel for low temperature service. However, there has been no conventional flux cored wire which satisfies these requirements.

A welding method in which considering the productivity of the solid wire and the weldability such as a feedability of the wire, the wire containing the alloy component in a small amount and having the low strength is used and a bond flux (bond flux) in which the amount of the alloy component to be added can be controlled is applied is also available. However, a melting rate of the bond flux is slower than that of the melt flux. Thus, the bond flux is difficult to be applied to the welding at high speed. This method also has problems, e.g., the bond flux easily absorbs the moisture, some variations of the toughness of the weld metal occur, the bead shape becomes some convex and the good welding workability is not obtained in the welding at high speed using the bond flux.

In consideration of these points, the development of the melt flux for the submerged arc welding by which the good mechanical properties of the weld metal and the weldability are obtained, and the development of the wire for the submerged arc welding having the good productivity and weldability have been attempted.

For example, JP-A-6-285679 discloses a melt flux in which the improvement of the weldability and the toughness at low temperature has been attempted in the submerged arc welding at high speed. However, the amount of SiO₂ in the flux ingredient is large, thus the amount of oxygen in the weld metal is also large, and therefore, the request for the higher toughness is insufficiently met. Because of the high content of MgO, a softening melting point of the flux becomes high, prongs occur on a bead surface, a wave shape becomes rough, and a slag removability and a bead appearance become not good.

JP-A-8-187593 discloses a melt flux where the weldability has been improved by controlling a grain size of the flux and the toughness has been enhanced by reducing the amount of oxygen in the weld metal. However, only the small amount of Al₂O₃ is added in the flux ingredient, and the good slag removability and bead appearance can not be obtained. Al₂O₃ is the extremely important ingredient for obtaining the good slag removability and bead appearance, and also has an effect of making an arc stability better. Thus, the amount of added Al₂O₃ described in JP-A-8-187593 does not exert its effects.

JP-A-2006-142377 discloses a flux cored wire for the submerged arc welding having a low tensile strength. The productivity and the feedability of the wire are improved. However, in this flux cored wire, since the amount of oxygen in the wire is large amount, thus, the amount of oxygen in the weld metal is increased and the good toughness at low temperature is not obtained. Further, the flux cored wire has a cross sectional shape having a seam, so that it absorbs the moisture in atmosphere. Therefore, only the reduction of moisture amount in the filled flux is not sufficient. The amount of diffusible hydrogen is increased in the weld metal, and the cold crack easily occurs after the welding.

JP-A-48-85443 discloses a flux cored wire for the submerged arc welding where the good weldability and the weld metal having the high toughness are obtained by containing a highly basic slag forming ingredient in the filled flux and using by combining with a neutral flux or a weakly basic flux. However, since Si, Mn, Mo and Ni are added to a sheath material in the wire, the tensile strength of the wire itself is high, the feedability of the wire are inferior. Since the large amount of the slag forming component is contained in the flux to be filled, the alloy component is insufficient and the request for still higher toughness of the weld metal is met insufficiently.

JP-A-49-103858 discloses a composite wire having the high toughness for the submerged arc welding, and has attempted to make the weld metal having the higher toughness and improve the weldability. However, making the weld metal having the higher toughness and the good weldability are incompatible in the wire components described in JP-A-49-103858.

Furthermore, JP-A-61-242791 discloses a seamless flux cored wire having a large diameter for high heat input submerged arc welding of the steel for low temperature service. However, the good toughness of the weld metal is not obtained by the wire component described in JP-A-61-242791. Even though the amount of the alloy component in a steel product applied to an sheath of the wire is small, the diameter of the wire is 4.5 to 10 mm which is thick. Thus, rigidity of the wire itself becomes strong. The feedability of the wire are deteriorated, and such a wire is applied to only the execution method in which the groove of a welded part is wide. Thus, a range of use thereof is limited, and production efficiency by welding is decreased.

JP-A-49-51136 discloses a flux for submerged-are welding of steels which is composed of SiO₂: 5-20%, CaO: 5-20%, CaF₂: 23-4%, Al₂O₃: 23-40%, MnO: ≤6%, MgO: ≤4% and TiO₂: ≤4%.

It is an object of the present invention to provide a method for submerged arc welding of a steel for low temperature service, particularly where weldability is good in a welding condition at high speed and a weld metal having excellent mechanical properties is obtained.
This object can be achieved by the features specified in the claims.

In order to solve the above problems, the present inventors extensively studied on a chemical composition of the melt flux, a wire component which is a sum of a steel sheath of a flux cored wire to be combined and the filled flux, a filled flux component, a total amount of hydrogen in the wire and a ratio of the filled flux, and also extensively studied on the wire to be combined with the flux for further enhancing a toughness because there is a limit to enhancement of the toughness of the weld metal in the study on the chemical composition of the flux alone. As a result, the present inventors have found that by limiting the chemical composition of the melt flux and limiting the chemical composition of the flux cored wire to be combined, the total amount of hydrogen in the wire and the ratio of the filled flux, it is possible to obtain a weld metal having the high toughness, obtain the good weldability and bead shape and obtain a welded part with high quality where the amount of diffusible hydrogen in the weld metal is low and there is no welding defect in the high speed submerged arc welding of steel for low temperature service, and have completed the present invention.

A summary of the present invention is as follows.

(2) A method for submerged arc welding of steel for low temperature service, wherein both (in total) a steel sheath and a filled flux contain C: 0.02 to 0.30%, Si: 0.08 to 0.6%, Mn: 1.2 to 3.0%, Ni: 0.5 to 3.5% and Mo: 0.03 to 0.8% by mass in a total mass of a flux cored wire where the steel sheath has been filled with the flux and the filled flux contains C: 0.01 to 0.27% and CaF₂: 2 to 15% and remainings are composed of Fe in the steel sheath, Fe in alloy powders, iron powders and unavoidable impurities, wherein a total amount of hydrogen in the wire is 50 ppm or less, and wherein the flux cored wire where there is no seam on the steel sheath filled with the 10 to 30% flux in the above component is combined and welded with a melt flux for submerged arc welding containing SiO₂: 8 to 25%, Al₂O₃: 30 to 50%, MgO: 0.5 to 5.0%, MnO: 0.5 to 5.0%, CaO: 5 to 20% and CaF₂: 25 to 50% by mass, wherein remainings are iron oxide and unavoidable impurities.

According to the method for the submerged arc welding of the steel for low temperature service of the present invention, the weld metal in which the amount of oxygen is small and the toughness is high can be obtained, the good weldability and bead shape are obtained, and the welded part with high quality having no welding defect can be obtained because the amount of diffusible hydrogen in the weld metal can be reduced, in the high speed submerged arc welding of the steel for low temperature service.

The invention is described in detail in conjunction with the drawings, in which:
FIG. 1 is a view showing a groove configuration of a multipass welding test plate used in Example of the present invention;
FIG. 2 is a schematic view showing a welding method in Example of the present invention; and
FIG. 3 is a schematic view showing a groove configuration of a test plate for horizontal fillet welding and a welding method used in Example of the present invention.

In order to solve the above problems, the present inventors extensively studied on the chemical composition of the melt flux, the wire component which is the sum of the steel sheath of the flux cored wire to be combined and the filled flux, the filled flux component, the total amount of hydrogen in the wire and the ratio of the filled flux.

The chemical composition of the flux is important for and much largely influences on welding speed up in the submerged arc welding and making the weld metal having the higher toughness. Thus, the welding flux enables high-speed welding by applying the melt flux, it was able to obtain that good bead appearance of fine waved and flat shape. However, it is necessary for making the weld metal having the higher toughness to increase the basicity of the flux. As a result of increasing the amount of basic mineral raw materials, the toughness in the weld metal was enhanced, but conversely a slag removability, a bead appearance and an arc stability were deteriorated.

In general, it is publicly known that if the basicity of the flux is increased, the weldability becomes inferior. Only by increasing the basicity, the good weldability and the mechanical properties of the weld metal can not be well-balanced. Thus, the increased amount of added Al₂O₃ was found in order to keep the good mechanical properties of the weld metal and obtain the excellent weldability. Al₂O₃ is the extremely important ingredient for obtaining the good slag removability and the good bead appearance and also has the effect of making the arc stability better. It is publicly known that the common melt flux for the submerged arc welding contains Al₂O₃, but the flux containing Al₂O₃ in a large amount is not used till now. It has been also described that Al₂O₃ generally lowers the basicity, but since Al₂O₃ is neutral oxide, it has been demonstrated that the amount of oxygen in the weld metal is not increased even if some amount of Al₂O₃ is increased. Therefore it became possible to well-balance the good mechanical properties of the weld metal and the weldability by optimizing the chemical composition of the flux including the control of the amount of Al₂O₃.

There is the limit to the enhancement of the toughness in the weld metal only in the study on the chemical composition of the flux. Thus, in order to further enhance the toughness, the wire combined with the flux was studied extensively.

It is the most important for making the weld metal having the higher toughness to balance the content of oxygen in the weld metal and optimize a crystal grain structure by adding an alloy element. Thus, the present inventor first studied the application of the flux cored wire where the necessary alloy component is controlled freely without increasing the strength of the wire itself, as the wire to be combined with the flux.

First, the amount of oxygen in the weld metal was controlled by applying a strong deoxidizer such as Mg and Al in the wire component, but because of the large amount of hydrogen in the Mg raw material itself, the amount of diffusible hydrogen in the weld metal became high and the cold crack occurred. Since Al produces coarse Al oxide in a large amount in the weld metal, the coarse oxide caused fracture, as a result, the toughness is remarkably reduced in the structure mainly composed of acicular ferrite in the steel for low temperature service.

Thus, the addition of C was newly found as the strong deoxidizer in place of Mg and Al. In this regard, however, in order to significantly exert the effect of deoxidation, it has been observed that the large amount of C in the filled flux tends to be more effective than the large amount of C in the steel sheath. Because in the case of the submerged arc welding, a welding current is high, C added in the steel sheath tends to be oxidized and consumed before being bound to oxygen in the weld metal. Thus, C was added mainly into the filled flux in order to keep C to a welding pool without being consumed by the oxidation before the deoxidation in the weld metal. When C is added in the steel sheath to control the amount of oxygen in the weld metal, it is necessary to add C in a large amount in consideration of consumption by the oxidation of C. However, when C in a large amount was added, the tensile strength of the wire itself became high, and the productivity, the feedability of the wire and the welding workability were accordingly inferior.

By controlling the wire component and the ratio of the filled flux and applying low hydrogen raw materials, it became possible to obtain the weld metal having the excellent mechanical properties. By removing the seam from the steel sheath, it became possible to perform annealing in the production process, it became possible to reduce the amount of hydrogen in the wire, it also became possible to perform a pickling and a cupper plating treatment. Thus, the wire surface can be further cleaned and corrosion resistance thereof can be enhanced. As the result, the feedability of the wire became good, and it became possible to enhance the weldability.

From the above results, it has been found that the weld metal having the high toughness can be obtained, the good weldability and the good bead shape are obtained, the amount of diffusible hydrogen is reduced in the weld metal and the welded part with high quality having no welding defect can be obtained in the high speed submerged arc welding of the steel for low temperature service by limiting the chemical composition of the melt flux and limiting the chemical composition of the flux cored wire to be combined, the total amount of hydrogen in the wire and the ratio of the filled flux.

Reasons why the component composition of the melt flux for the submerged arc welding used in the present invention is limited will be described below. The following % denotes % by mass.

SiO₂ is the important ingredient for forming the good welding bead shape, but when this is excessively added, the amount of oxygen in the weld metal is increased, so that the toughness deteriorates. When the amount of SiO₂ is less than 8%, attachment of a weld toe end of the beads worsens, the slag removability is deteriorated and also undercut occurs particularly in the welding at high speed. Meanwhile when the amount exceeds 25%, the amount of oxygen in the weld metal is increased, so that the toughness deteriorates. Therefore, the amount of SiO₂ is 8 to 25%.

Al₂O₃ is the extremely important ingredient for obtaining the good slag removability and the good bead appearance in the welding at high speed, and also has the effect of making the arc stability better. When a content thereof is less than 30%, its effects can not be obtained. Meanwhile when the content exceeds 50%, the bead shape becomes convex and the slag removability becomes not good. Therefore, the content of Al₂O₃ is 30 to 50%.

MgO has the effect of enhancing the fire resistance of the slag and the basicity. When the content thereof is less than 0.5%, the basicity in the flux becomes low and the amount of oxygen in the weld metal is increased, so that the toughness deteriorates. Meanwhile when the content exceeds 5.0%, the softening melting point of the flux becomes high, the projections occur and the wave shape becomes rough on the bead surface, and the slag removability and the bead appearance become not good. Therefore, the content of MgO is 0.5 to 5.0%.

MnO is the ingredient effective for controlling a viscosity, a fluidity and a melting point of the slag. When the content thereof is less than 0.5%, the viscosity of the slag is reduced to deteriorate the fluidity. In particular, bead meander and the undercut occur in the welding at high speed. Meanwhile when the content exceeds 5.0%, the viscosity of the slag becomes excessively high, and slag inclusion and baking occur , so that the slag removability deteriorate. Therefore, the content of MnO is 0.5 to 5.0%.

CaO is the important ingredient for controlling the melting point and the fluidity of the slag. When the content thereof is less than 5%, the attachment of the weld toe end of the beads worsens, the bead appearance becomes not good, and the undercut also occurs in the welding at high speed. Meanwhile when the content exceeds 20%, the slag fluidity becomes not good, bead heights are uneven and the slag removability also becomes not good. Therefore, the content of CaO is 5 to 20%.

CaF₂ has the effect of improving the toughness, but when CaF₂ is added in a large amount, a smoothness of the beads is impaired because this has the low melting point. When the content thereof is less than 25%, the effect of improving the toughness is not exerted. When the content exceeds 50%, the bead appearance becomes not good. Therefore, the content of CaF₂ is 25 to 50%.

A grain size constitution of the flux is preferably 1.4×0.21 mm in consideration of shielding property of the weld metal against the atmosphere and outgassing, and it is preferable that the content of the flux having grain diameters of less than 0.21 mm is 12% or less.

The remainings are iron oxide (FeO etc.) and impurities such as P and S. Both P and S produce compounds having the low melting point, so that the toughness reduces. Thus, their contents are preferably as low as possible.

Subsequently, the component composition of the flux cored wire to be combined with the melt flux for the submerged arc welding will be set forth. The wire component is contained in either or both the steel sheath or/and the filled flux.

C in the entire flux cored wire is an important element for assuring the strength of the weld metal by strengthening the solid solution, as well as has the effect of reducing the amount of oxygen in an arc atmosphere and the weld metal by reacting with oxygen in the arc. When the total amount of C in either or both the steel sheath or/and the filled flux (hereinafter referred to as the wire component) is less than 0.02%, the deoxidation and ensuring the strength are insufficient, and the toughness is reduced. Meanwhile when the amount thereof exceeds 0.30%, the strength is high and the toughness is reduced in the structure mainly composed of martensite because the amount of C in the weld metal becomes large. Therefore, the amount of C in the wire component is 0.02 to 0.30%.

In order to significantly exert the effect of deoxidation by C, the large amount of C in the filled flux is more effective than the large amount of C in the steel sheath. Thus, the amount of C in the filled flux is 0.01 to 0.27%. When the amount of C in the filled flux is less than 0.01%, the sufficient deoxidation effect is not obtained and the toughness is deteriorated. Meanwhile it exceeds 0.27%, the deoxidation becomes excessive, the strength of the weld metal becomes high and the toughness is deteriorated.

Si in the wire component is the important element for enhancing the strength and the toughness in the weld metal, and has the effect of reducing the amount of oxygen in the weld metal because this element is bound to oxygen during the welding to become a slag component. When the amount of Si in the wire component is less than 0.08%, the strength of the weld metal is low, and the amount of oxygen is increased, so that the toughness reduces. Meanwhile when the amount exceeds 0.6%, the solid solution strengthening is given to a matrix of the weld metal, but crystal grains of ferrite are roughly enlarged, so that the toughness remarkably reduces. Therefore, the amount of Si in the wire component is 0.08 to 0.6%.

Mn in the wire component is the element effective for enhancing a hardenability to increase the strength. When the amount of Mn in the wire component is less than 1.2%, the hardenability is insufficient, so that the strength decreases. Meanwhile when the amount exceeds 3.0%, the hardenability becomes excessive, the strength of the weld metal becomes high and the toughness is reduced. Therefore, the amount of Mn in the wire component is 1.2 to 3.0%.

Ni in the wire component aims at ensuring the strength and the toughness in the weld metal. When the amount of Ni in the wire component is less than 0.5%, the strength is low and the toughness is reduced. Meanwhile when the amount exceeds 3.5%, because Ni is an austenite stabilization element, the grain diameters of austenite are roughly enlarged,so that the toughness deteriorates in the weld metal. Therefore, the amount of Ni in the wire component is 0.5 to 3.5%.

Mo in the wire component aims at ensuring the strength of the weld metal. When the amount of Mo in the wire component is less than 0.03%, the strength is reduced. Meanwhile when the amount exceeds 0.8%, an intermetallic compound is generated in the weld metal, so that the weld metal is remarkably hardened and the toughness is reduced. Therefore, the amount of Mo in the wire component is 0.03 to 0.8%.

CaF₂ in the filled flux is the important ingredient for enhancing the toughness of the weld metal, and has the effect of reducing an oxygen partial pressure in the arc atmosphere during the welding and reducing the amount of oxygen in the weld metal. When the amount of CaF₂ in the filled flux is less than 2%, the amount of oxygen in the weld metal is increased and the toughness is reduced. Meanwhile when the amount exceeds 15%, the arc becomes unstable, the slag component in the wire is increased, the amount of deposition is reduced and a deposition efficiency is reduced. Therefore, the amount of CaF₂ in the filled flux is 2 to 15%.

When the total amount of hydrogen contained in the flux cored wire is increased, hydrogen gas upon welding causes the welding defects such as blow holes, pits and pock marks. The amount of diffusible hydrogen in the weld metal is increased to cause the cold crack. Therefore, it is necessary to make the total amount of hydrogen in the wire 50 ppm or less in order to prevent the welding defect and the cold crack.

The ratio of the filled flux in the wire component is 10 to 30%. When the ratio of the filled flux is less than 10%, the alloy elements required for the objective high toughness is insufficient, and the sufficient mechanical properties is not obtained. Meanwhile when the ratio exceeds 30%, a seamed portion is welded after forming and removing the seam upon producing the flux cored wire having no seam, and the flux easily enters in the seamed portion upon welding, as a result, the welding defect occurs and the productivity deteriorates. When the ratio of the filled flux is increased, the amount of oxygen in the filled flux is increased and the amount of oxygen in the weld metal is also increased. Thus the toughness is reduced.

For the alloy elements in the filled flux, the compositions to be compounded are controlled in limited ranges in consideration of the ingredients and their contents in the steel sheath, and the flux cored wire corresponding to the ingredients in various steel materials (mother materials) can be made.

Moreover, in order to reduce the amount of oxygen in the weld metal, the main component of the filled flux is metal powder, and it is preferable to add no oxides as a flux former.

In addition, both P and S as the impurities produce the compounds having the low melting point to reduce the toughness. Thus, their contents are preferably as low as possible.

In order to obtain a stable arc and enhanced feedability of the wire and deposition efficiency in the method for the submerged arc welding of the steel for low temperature service according to the present invention, it is preferable that an external diameter of the wire to be combined with the melt flux is 1.0 to 4.0 mm.

This wire has a cross-sectional shape having no seam (hereinafter referred to as seamless) on the steel sheath, and thus is excellent in moisture absorbed resistance. Further, since the annealing can be performed during the production process, the amount of diffusible hydrogen in the weld metal can be reduced as much as possible. In the conventional flux cored wire having the seam portion, which is formed from the sheath steel and is not welded, the filled flux easily absorbs the moisture, and since the annealing can not be performed during the production process, the amount of diffusible hydrogen in the weld metal tends to increase. The reason why the flux cored wire having the seam can not be annealed during the production process is because the seam portion has some space, if the wire is annealed, an alloy agent in the filled flux is oxidized to make oxide, which increases the amount of oxygen in the weld metal and the predetermined hardenability can not be obtained and thus the strength and the toughness in the weld metal are reduced. In the flux cored wire having the seam, the cross-section of the wire is asymmetrical, the wire itself is easily twisted, and the center misalignment between the groove center and the wire easily occurs upon welding. On the other hand, in the seamless wire, the cross-section of the seamless wire is a concentric circle, symmetrical in all directions, easily handled and hardly twisted.

In the seamless wire, the pickling and the plating treatment can also be performed during the production process. Thus, the wire surface can be further cleaned and anticorrosion property thereof can be enhanced. Thus the feedability of the wire became good, and the weldability can be enhanced.

### EXAMPLES

The effects of the present invention will be described in more detail below by Examples.

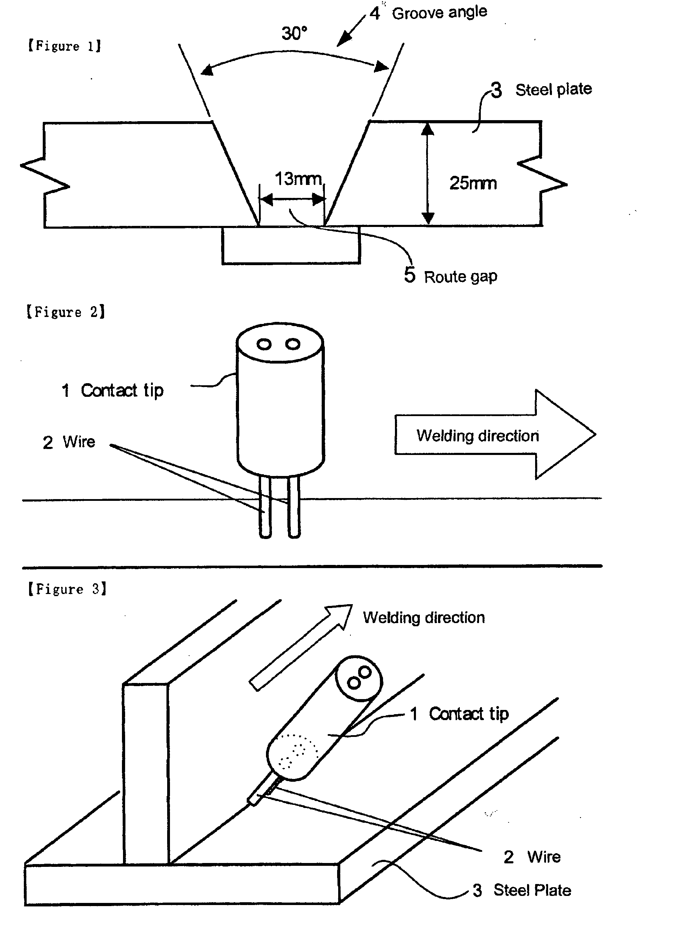

Various flux cored wires shown in Table 3 were manufactured by way of trial using a melt flux containing various ingredients shown in Table 1 and a steel sheath shown in Table 2. By combining them, as an evaluation of the mechanical properties in a weld metal by a multipass welding, a welding test was carried out by processing a steel plate having a plate thickness of 25 mm shown in Table 4 into a steel plate 3 of a groove configuration having a groove angle 4 of 30° and a route gap 5 of 13 mm as shown in FIG. 1, and welding in an arrow direction using a welding condition shown in Table 5 and a two-wires one-electrode method using one contact tip 1 and two wires 2 shown in FIG. 2. As the evaluation of weldability, a welding test of a welding length of 1 m was carried out by a horizontal fillet welding using the steel plate having the plate thickness of 25 mm shown in Table 4, assembling the steel plate 3 into a T-shape as shown in FIG. 3 and using the two-wires one-electrode method and setting one contact tip 1 and two wires 2 under the welding condition shown in Table 6.
The melt fluxes shown in Table 1 were by melting various mineral raw materials at high temperature of 1,500°C or above, cooling them followed by pulverizing them into powders, and sizing them into a grain size of 1.4×0.21 mm. For the flux cored wire shown in Table 3, using the steel sheath shown in Table 2, in the case of a steel pipe of F1, the flux was filled with vibration in the steel pipe, whose diameter was shrunk and the pipe was annealed to make a wire. In the case of a sheath steel of F2, the sheath steel was molded into a U-shape in a molding step, the flux was filled therein, which was then molded into an O-shape, a seam portion was welded, the diameter was reduced and the steel was annealed to make a wire. In the case of a sheath steel of F3, the sheath steel was molded into a U-shape in the molding step, the flux was filled therein, which was then molded into an rap shape followed by reduction the diameter to make a wire. The diameter of these wires was drawed to 2.0 mm. The total amount of hydrogen in the wire was measured using a high frequency heating method by a thermal conductivity system.

**[Table 1]**

| Flux code | Chemical compositions of Flux (% by mass) | | | | | | |
|---|---|---|---|---|---|---|---|
| | SiO₂ | Al₂O₃ | MgO | MnO | CaO | CaF₂ | *Remainings |
| MF1 | 8,6 | 40,6 | 4,0 | 2,9 | 10,4 | 30,8 | 2,7 |
| MF2 | 24,7 | 33,3 | 1,6 | 2,3 | 6,6 | 27,3 | 4,2 |
| MF3 | 9,1 | 30,3 | 0,8 | 1,3 | 7,2 | 49,4 | 1,9 |
| MF4 | 8,9 | 49,4 | 1,0 | 0,8 | 7,3. | 28,3 | 4,3 |
| MF5 | 12,9 | 38,8 | 0,5 | 1,6 | 11,5 | 31,8 | 2,9 |
| MF6 | 10,1 | 30,6 | 4,9 | 2,1 | 6,9 | 43,5 | 1,9 |
| MF7 | 21,2 | 37,4 | 1,8 | 0,5 | 11,3 | 25,3 | 2,5 |
| MF8 | 12,6 | 31,1 | 2,9 | 4,9 | 13,3 | 32,2 | 3,0 |
| MF9 | 11,3 | 35,3 | 4,4 | 3,9 | 5,7 | 36,5 | 2,9 |
| MF10 | 10,5 | 37,3 | 1,5 | 1,2 | 19,6 | 26,4 | 3,5 |
| MF11 | 8,8 | 51,8 | 1,3 | 1,2 | 8,6 | 25,7 | 2,6 |
| MF12 | 26,4 | 28,9 | 0,7 | 2,3 | 9,1 | 29,4 | 3,2 |
| MF13 | 15,6 | 30,9 | 0,4 | 5,2 | 10,2 | 35,2 | 2,5 |
| MF14 | 7,2 | 33,1 | 2,0 | 1,1 | 15,7 | 37,9 | 3,0 |
| MF15 | 10,0 | 35,5 | 5,4 | 1,8 | 9,7 | 35,7 | 1,9 |
| MF16 | 11,2 | 35,7 | 3,4 | 0,9 | 4,2 | 42,4 | 2,2 |
| MF17 | 15,2 | 43,4 | 4,2 | 0,4 | 6,3 | 27,6 | 2,9 |
| MF18 | 9,5 | 34,2 | 2,4 | 1,2 | 21,4 | 28,5 | 2,8 |
| MF19 | 19,8 | 31,6 | 1,9 | 1,3 | 18,8 | 23,5 | 3,1 |
| MF20 | 8,6 | 30,6 | 0,6 | 0,7 | 5,1 | 51,2 | 3,2 |

| | | | | | | | |
|---|---|---|---|---|---|---|---|
| *The remainings are FeO and unavoidable impurities. | | | | | | | |

**[Table 2]**

| Sheath code | Sheath shape | Seam type | Chemical compositions of steel strip (% by mass) | | | | | |
|---|---|---|---|---|---|---|---|---|
| | | | C | Si | Mn | P | S | Al |
| F1 | Pipe | Seamless | 0,02 | 0,02 | 0,31 | 0,008 | 0,004 | 0,007 |
| F2 | Steel strip | Seamless | 0,05 | 0,01 | 0,28 | 0,009 | 0,006 | 0,009 |
| F3 | Steel strip | fold | 0,03 | 0,02 | 0,30 | 0,009 | 0,006 | 0,008 |

**[Table 3]**

| Wire code | Sheath code | Ratio of filled flux (% by mass) | Chemical composition of wire (% by mass) | | | | | | | | | Total amount of hydrogen in wire (ppm) |
|---|---|---|---|---|---|---|---|---|---|---|---|---|
| | | | C | | | Si | Mn | Ni | Mo | CaF2 | Remaining s * | |
| | | | Sheath | Filled flux | Total | | | | | | | |
| W1 | F1 | 17 | 0.01 | 0.01 | 0.02 | 0.16 | 1.49 | 0.71 | 0.62 | 2.04 | bal. | 38 |
| W2 | F2 | 23 | 0.04 | 0.25 | 0.29 | 0.21 | 1.68 | 0.69 | 0.70 | 14.95 | bal. | 24 |
| W3 | F2 | 11 | 0.04 | 0.14 | 0.18 | 0.08 | 2.54 | 1.20 | 0.61 | 4.42 | bal. | 22 |
| W4 | F1 | 29 | 0.01 | 0.21 | 0.22 | 0.59 | 2.79 | 1.55 | 0.21 | 11.82 | bal. | 20 |
| W5 | F1 | 28 | 0.01 | 0.27 | 0.28 | 0.22 | 1.26 | 2.12 | 0.35 | 13.13 | bal. | 38 |
| W6 | F2 | 26 | 0.03 | 0.06 | 0.09 | 0.32 | 2.97 | 0.59 | 0.58 | 6.87 | bal. | 32 |
| W7 | F1 | 12 | 0.02 | 0.01 | 0.03 | 0.42 | 1.65 | 0.54 | 0.21 | 3.52 | bal. | 22 |
| W8 | F2 | 16 | 0.04 | 0.12 | 0.16 | 0.30 | 1.99 | 3.47 | 0.22 | 7.02 | bal. | 49 |
| W9 | F1 | 21 | 0.02 | 0.17 | 0.19 | 0.44 | 1.44 | 2.61 | 0.04 | 8.78 | bal. | 15 |
| W10 | F2 | 18 | 0.05 | 0.09 | 0.14 | 0.12 | 2.22 | 0.71 | 0.79 | 4.14 | bal. | 19 |
| W11 | F1 | 9 | 0.02 | 0.03 | 0.05 | 0.09 | 1.55 | 0.51 | 0.04 | 3.68 | bal. | 45 |
| W12 | F1 | 23 | 0.02 | 0.07 | 0.09 | 0.07 | 1.92 | 1.55 | 0.18 | 16.07 | bal. | 39 |
| W13 | F3 | 25 | 0.02 | 0.13 | 0.15 | 0.73 | 1.99 | 0.86 | 0.42 | 6.57 | bal. | 71 |
| W14 | F2 | 31 | 0.03 | 0.14 | 0.17 | 0.18 | 1.71 | 1.68 | 0.21 | 10.03 | bal. | 45 |
| W15 | F2 | 13 | 0.04 | 0.19 | 0.23 | 0.22 | 1.88 | 1.66 | 0.21 | 1.43 | bal. | 21 |
| W16 | F1 | 21 | 0.01 | 0.002 | 0.012 | 0.31 | 2.11 | 1.08 | 0.07 | 6.66 | bal. | 35 |
| W17 | F1 | 15 | 0.02 | 0.28 | 0.30 | 0.15 | 2.56 | 1.88 | 0.23 | 8.69 | bal. | 25 |
| W18 | F2 | 13 | 0.04 | 0.003 | 0.04 | 0.31 | 1.92 | 2.06 | 0.02 | 7.15 | bal. | 29 |
| W19 | F2 | 18 | 0.04 | 0.27 | 0.32 | 0.14 | 2.54 | 3.31 | 0.57 | 5.55 | bal. | 33 |
| W20 | F2 | 28 | 0.04 | 0.19 | 0.23 | 0.23 | 1.13 | 1.36 | 0.36 | 12.24 | bal. | 27 |
| W21 | F1 | 16 | 0.02 | 0.09 | 0.11 | 0.34 | 3.17 | 2.15 | 0.49 | 4.92 | bal. | 30 |
| W22 | F2 | 18 | 0.04 | 0.13 | 0.17 | 0.24 | 1.88 | 1.15 | 0.91 | 6.62 | bal. | 24 |
| W23 | F2 | 11 | 0.04 | 0.05 | 0.09 | 0.19 | 1.53 | 0.41 | 0.21 | 6.09 | bal. | 35 |
| W24 | F1 | 20 | 0.01 | 0.06 | 0.07 | 0.33 | 1.97 | 3.69 | 0.44 | 9.67 | bal. | 18 |

| | | | | | | | | | | | | |
|---|---|---|---|---|---|---|---|---|---|---|---|---|
| *The remainings are Fe in the sheath, Fe in the alloy powder, iron powders and unavoidable impurities. | | | | | | | | | | | | |

**[Table 4]**

| Steel plate thickness (mm) | Chemical compositions of steel plate (% by mass) | | | | | |
|---|---|---|---|---|---|---|
| | C | Si | Mn | P | S | Al |
| 25 | 0,05 | 0,11 | 2,01 | 0,007 | 0,004 | 0,01 |

**[Table 5]**

| Wire diameter (mm) | Welding current (A) | Arc voltge (V) | Welding speed (cm/min) | Welding heat input (kJ/cm) | Power supply polarity | Welding method |
|---|---|---|---|---|---|---|
| 2,0 | 900 | 30 | 36 | 45,0 | DCEP | Two-wires one-electrode flat joint multipass |

**[Table 6]**

| Wire diameter (mm) | Welding current (A) | Arc voltge | Welding speed (V) (cm/min) | Welding heat input (kJ/cm) | Power supply polarity | Welding method |
|---|---|---|---|---|---|---|
| 2,0 | 900 | 30 | 100 | 16,2 | DCEP | Two-wires one-electrode horizontal fillet |

For the evaluation of each melt flux and flux cored wire to be combined, the amount of diffusible hydrogen in the weld metal, the bead appearance and shape after the horizontal fillet welding, a slag removability and the presence or absence of an undercut, the presence or absence of a welding defect after the multipass welding, the amount of oxygen in the weld metal, a tensile strength and a toughness were examined.

The amount of diffusible hydrogen in the weld metal was measured in accordance with JIS Z 3118 in the combination shown in Table 7 of the melt flux containing various ingredients shown in Table 1 and various flux cored wires shown in Table 3, and 6 mL/100 g or less was determined to be good.

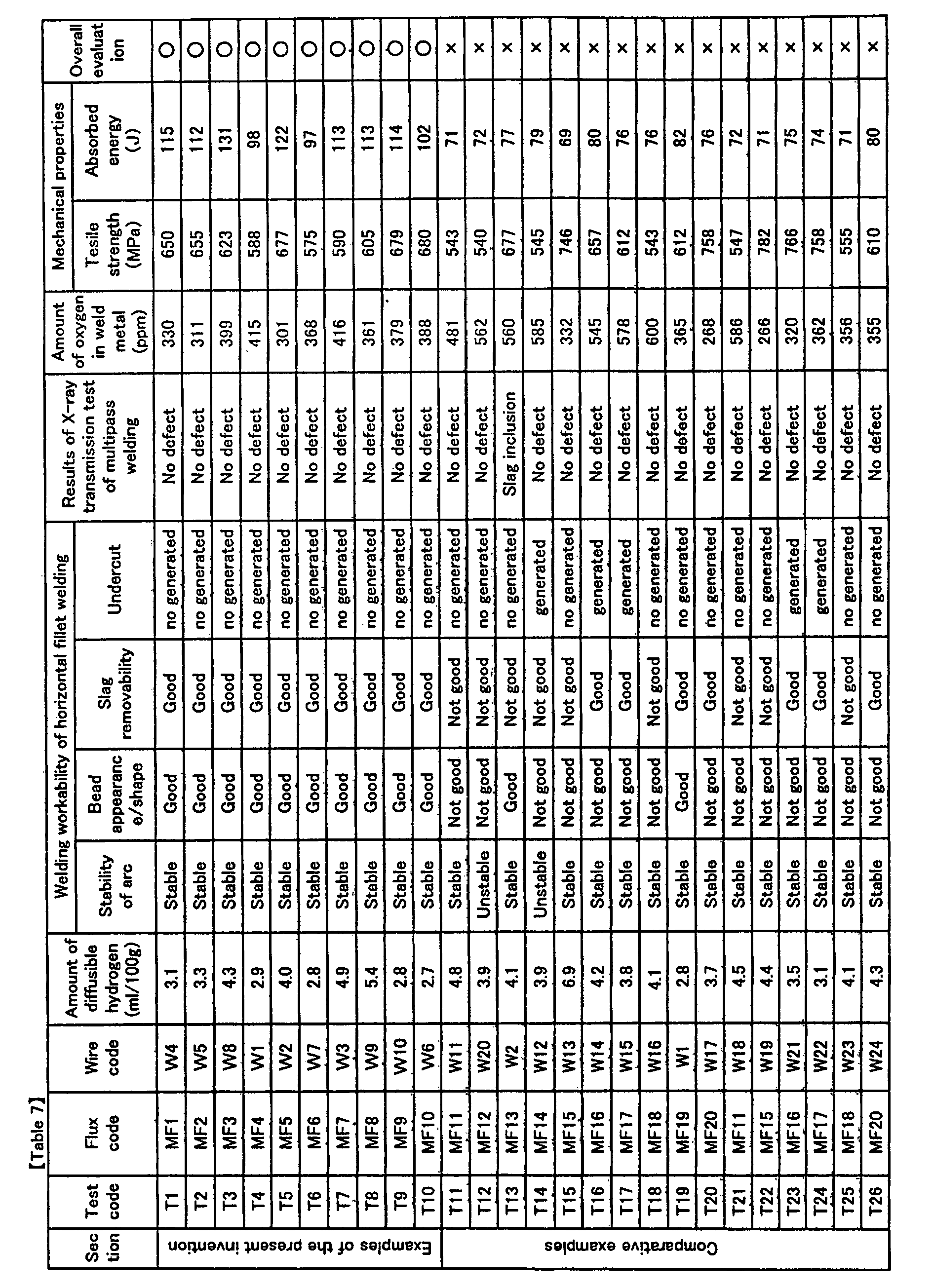

The welding defect in the multipass welding was examined by an X ray transmission test.

For evaluating the mechanical properties of the weld metal, a mechanical test was carried out by performing Charpy impact test (JIS Z2202 No. 4) and a tensile test (JIS Z2201 No. A1) centering around 7 mm under the steel plate surface of multipass welding test pieces and collecting the test pieces. The toughness was evaluated by Charpy impact test at -60°C, the steel was repeatedly tested three times and an average thereof was used for the evaluation. In Charpy impact test, absorbed energy of 90 J or more was determined to be good. In the evaluation of the tensile strength, 560 MPa or more was determined to be good. These results of the examinations are collectively shown in Table 7.

As is evident from Table 7, in test codes T1 to T10 which were Examples of the present invention, the amount of diffusible hydrogen was low, the weldability in the horizontal fillet welding was good, there was no defect in the portion of the multipass welding, the mechanical properties of the weld metal was excellent and the extremely satisfied results were obtained because flux codes MF1 to MF10 and combined wire codes W1 to W10 satisfied the requirements of the present invention.

For these, in the test code T11 which was Comparative Example, the content of Al₂O₃ in the flux code MF11 was high, and thus, the bead shape and the slag removability were not good. The ratio of the filled flux in the combined wire code W11 is low, and thus the tensile strength and the absorbed energy were low.

In the test code T12, the content of SiO₂ in the flux code MF12 was high, and thus the amount of oxygen in the weld metal was large and the absorbed energy was low. The content of Al₂O₃ was low, and thus the slag removability and the bead appearance were not good. Further the content of Mn in the combined wire code W20 was low, and thus the tensile strength was low.

In the test code T13, the content of MgO in the flux code MF13 was low, and thus the amount of oxygen in the weld metal was large and the absobed energy was low. The content of MnO was high, and thus the slag removability was not good and the defect such as slag inclusion occurred in the multipass welding.

In the test code T14, the content of SiO₂ in the flux code MF14 was low, and thus the bead appearance and the slag removability were not good, and the undercut also occurred. The content of Si in the combined wire code W12 was also low, and thus the tensile strength of the weld metal was low, the amount of oxygen was large, and the absorbed energy was low. Further, the content of CaF₂ was high, and thus the arc was unstable.

In the test code T15, the content of MgO in the flux code MF15 was high, and thus the bead appearance and the slag removability were not good. Since the combined wire code W13 was the wire having the seam, the total amount of hydrogen in the wire was large, the amount of diffusible hydrogen in the weld metal was large. Further, the content of Si was high, and thus the strength of the weld metal was high and the absorbed energy was low.

In the test code T16, the content of CaO in the flux code MF16 was low, and thus the bead appearance was not good and the undercut also occurred. The ratio of the filled flux in the combined wire code W14 was high, and thus the amount of oxygen in the weld metal was large and the absorbed energy was low.
In the test code T17, the content of MnO in the flux code MF17 was low, and thus the beads meandered and the undercut also occurred. The content of CaF₂ in the combined wire code W15 was low, and thus the amount of oxygen in the weld metal was large and the absorbed energy was low.

In the test code T18, the content of CaO in the flux code MF18 was high, and thus the bead appearance and the slag removability were not good. The content of C in the wire component in the combined wire code W16 was low, and thus the tensile strength was low, the amount of oxygen was large, and the absorbed energy was low in the weld metal.

In the test code T19, the content of CaF₂ in the flux code MF19 was low, and thus the absorbed energy in the weld metal was low.

In the test code T20, the content of CaF₂ in the flux code MF20 was high, and thus the bead shape was not good. The content of C in the filled flux in the combined wire code W17 was high, the strength was high and the absorbed energy was low in the weld metal.

In the test code T21, the content of Al₂O₃ in the flux code MF11 was high, and thus the bead shape and the slag removability were not good. The content of Mo in the wire code W18 was low, and thus the tensile strength was low. Further, the content of C in the filled flux was low, and thus the amount of oxygen was large and the absorbed energy was low in the weld metal.

In the test code T22, the content of MgO in the flux code MF15 was high, and thus the bead appearance and the slag removability were not good. The content of C in the wire component in the wire code W19 was high, and thus the strength was high and the absorbed energy was low in the weld metal.

In the test code T23, the content of CaO in the flux code MF16 was low, and thus the bead appearance was not good and the undercut also occurred. The content of Mn in the wire code W21 was high, and thus the strength was high and the absorbed energy was low in the weld metal.

In the test code T24, the content of MnO in the flux code MF17 was low, and thus the beads meandered and the undercut also occurred. The content of Mo in the wire code W22 was high, and thus the strength was high and the absorbed energy was low in the weld metal.

In the test code T25, the content of CaO in the flux code MF18 was high, and thus the bead appearance and the slag removability were not good. The content of Ni in the wire code W23 was low, and thus the tensile strength was low and the absorbed energy was low in the weld metal.

In the test code T26, the content of CaF₂ in the flux code MF20 was high, and thus the bead shape was not good. The content of Ni in the wire code W24 was high, and thus the absorbed energy was low.

## Claims

1. A method for submerged arc welding of steel for low temperature service by or flux cored steel wire combined with a melt flux, wherein both in total the steel sheath and the filled flux contain C: 0.02 to 0.30%, Si: 0.08 to 0.6%, Mn: 1.2 to 3.0%, Ni: 0.5 to 3.5% and Mo: 0.03 to 0.8% by mass in a total mass of a flux cored wire where the steel sheath has been filled with the flux and the filled flux contains C: 0.01 to 0.27% and CaF₂: 2 to 15% and remainings are composed of Fe in the steel sheath, Fe in alloy powders, iron powders and unavoidable impurities, wherein a total amount of hydrogen in the wire is 50 ppm or less, and wherein the flux cored wire where there is no seam on the steel sheath filled with the 10 to 30% flux in the component is combined and welded with a melt flux for submerged are welding containing SiO₂: 8 to 25%, Al₂O₃: 30 to 50%, MgO: 0.5 to 5.0%, MnO: 0.5 to 5.0%, CaO: 5 to 20% and CaF₂: 25 to 50% by mass, wherein remainings are iron oxide and unavoidable impurities.

## Patentansprüche

1. Verfahren zum Unterpulverschweißen von Stahl für den Niedertemperatureinsatz mit einem Schmelzflußmittel, wobei der Stahlmantel und das eingefüllte Flußmittel insgesamt massebezogen 0,02 bis 0,30 % C, 0,08 bis 0,6 % Si, 1,2 bis 3,0 % Mn, 0,5 bis 3,5 % Ni und 0,03 bis 0,8 % Mo in einer Gesamtmasse eines Drahts mit Flußmittelkern enthalten, bei dem der Stahlmantel mit dem Flußmittel gefüllt wurde und das eingefüllte Flußmittel 0,01 bis 0,27 % C und 2 bis 15 % CaF₂ enthält und sich der Rest aus Fe im Stahlmantel, Fe in Legierungspulvern, Eisenpulvern und unvermeidlichen Verunreinigungen zusammensetzt, wobei eine Gesamtwasserstoffmenge im Draht höchstens 50 ppm beträgt und wobei der Draht mit Flußmittelkern dort, wo keine Naht auf dem mit 10 bis 30 % Flußmittel in der Komponente gefüllten Stahlmantel vorhanden ist, mit einem Schmelzflußmittel zum Unterpulverschweißen kombiniert und geschweißt wird, das massebezogen 8 bis 25 % SiO₂, 30 bis 50 % Al₂O₃, 0,5 bis 5,0 % MgO, 0,5 bis 5,0 % MnO, 5 bis 20 % CaO und 25 bis 50 % CaF₂ enthält, wobei der Rest Eisenoxid und unvermeidliche Verunreinigungen ist.

## Revendications

1. Procédé de soudure à l'arc submergé d'acier pour service à basse température, avec un flux fondu, où la gaine en acier et la charge de flux contiennent au total : C : de 0,02 à 0,30 %, Si : de 0,08 à 0,6 %, Mn : de 1,2 à 3,0 %, Ni : de 0,5 à 3,5 % et Mo : de 0,03 à 0,8 % en masse dans une masse totale d'un fil à âme en flux où la gaine en acier a été chargée en flux et où la charge de flux contient : C : de 0,01 à 0,27 % et CaF₂ : de 2 à 15 %, et où le reste est composé de Fe dans la gaine en acier, de Fe dans les poudres d'alliage, les poudres de fer et d'impuretés inévitables, où un montant total d'hydrogène dans le fil est inférieur ou égal à 50 ppm, et où le fil à âme en flux, là où la gaine en acier chargée de 10 à 30 % de flux dans le composant est exempte de joint, est combiné et soudé à un flux fondu pour une soudure à l'arc submergé contenant : SiO₂ : de 8 à 25 %, Al₂O₃ : de 30 à 50 %, MgO : de 0,5 à 5,0 %, MnO : de 0,5 à 5,0 %, CaO : de 5 à 20 % et CaF₂ : 1 de 25 à 50 % en masse, le reste étant composé d'oxyde de fer et d'impuretés inévitables.
